# EUROPEAN PATENT SPECIFICATION

(11) **EP 4 085 763 B1**
(45) Date of publication and mention of the grant of the patent: **11.02.2026**
(21) Application number: 20910445.4
(22) Date of filing: 20.11.2020
(51) Int. Cl.: B01F 23/231, A01K 63/04, C02F 3/20, C02F 7/00

(54) **A DEVICE FOR THE INJECTION OF FLUIDS INTO AQUACULTURE CAGES IN THE SEA, LAKES, RIVERS OR ARTIFICIAL CONTAINERS**
VORRICHTUNG ZUM EINSPRITZEN VON FLÜSSIGKEITEN IN AQUAKULTURKÄFIGE IM MEER, IN SEEN, FLÜSSEN ODER KÜNSTLICHEN BEHÄLTERN
DISPOSITIF D'INJECTION DE FLUIDES DANS DES CAGES POUR L'AQUACULTURE DANS LA MER, UN LAC, UNE RIVIÈRE OU DES CONTENEURS ARTIFICIELS

(30) Priority: 03.01.2020 US 202062956942 P
(43) Date of publication of application: 09.11.2022
(73) Proprietor: Oxzo S.A., Puerto Montt, 5501619 (CL)
(72) Inventor: MARCUS DEL CAMPO, John Robert, Puerto Montt, 5501619 (CL); HUSAK SOTOMAYOR, Thomas Wenzel, Puerto Montt, 5501619 (CL)
(74) Representative: Clarke, Modet y Cía., S.L.
(86) International application number: PCT/IB2020/060986
(87) International publication number: WO 2021/137038

(56) References cited:
- WO-A1-2017/132778
- WO-A1-2020/233729
- CL-U1- 2019 003 921
- CN-A- 101 033 099
- CN-A- 101 033 099
- CN-A- 106 818 606
- CN-A- 106 818 606
- CN-U- 203 369 241
- CN-U- 205 161 601
- CN-Y- 201 226 733
- US-A- 4 663 089
- US-A- 5 938 983
- US-A1- 2010 174 099
- US-A1- 2012 313 267
- US-A1- 2013 175 716

## Description

### FIELD OF THE INVENTION

The present invention relates to the aquaculture industry. In particular, the present invention is related to a fluid injection device in cages for aquaculture in seas, lakes, rivers, or artificial containers. This fluid injection device solves the space problem, consisting of a compact diffuser with multiple functions per unit and easy installation.

In addition, for the maintenance process of the fluid injection device, no tools are required, and only an unskilled operator is required.

If the fluids to be injected are air and oxygen, this device allows respectively upwelling and oxygenation in the water column, independently.

Next, the differentiating effects of oxygenation and upwelling are explained:
Oxygenation
   - Bubbles with a diameter of less than 100 micrometers.
   - High mass transfer in the water column, complete dissolution of the bubble.
Upwelling
   - Bubbles with a diameter greater than 1 millimeter.
   - Bubbles maintain their integrity within the water column.
   - Constant upward water velocity and flow.
   - Ascent of deep waters with less biological content.
   - Continuous transport and renewal of water masses.
   - Change in intensity and orientation of natural currents, reducing their impact on the module.

It is worth mentioning that, by increasing the diameter of the bubble to the order of millimeters, the effects of mass transfer during its ascent in the water column are not significant and do not alter its integrity.

By distributing the same air flow in several emission points, the density of bubbles decreases and thus also the interference between them, increasing the relative entrainment per bubble and the total entrainment of water in the column.

The effect of upwelling on the reduction of chlorophyll in the water is proportional to the flow of air injected, plus only up to a certain flow. The mitigating effect is then independent of the flow and increases only by distributing it over a greater number of bubble points.

For the upwelling flow to develop completely in the water column, the ratio between the depth (z) and the diameter of the diffuser (D) where (z/D) must be greater than 7.

### STATE OF THE ART

Currently in the aquaculture industry, there is the inconvenience of injecting gases into sea, lake or river cages with reduced space, which comprises a compact diffuser with multiple functions per unit, since it includes at least two pipes or tubes, rigid or flexible, with injectors of different sizes to dissolve different gases in a liquid fluid, normally river, sea, or lake water, and various solutions have been found in the state of the art that partially solve the technical problem posed. Among the known state of the art, there is the patent number US6264176, which discloses an aeration diffuser where the diffuser is to mix and oxygenate water or another liquid with a runway that uses a self-supporting microporous tubular membrane, arranged in a spiral or grid configuration, with openings between neighboring elements that are at least equal to the diameter of the membrane. The gas, when forced through the tubular membrane, forms fine bubbles that agitate, oxygenate, and entrain the surrounding liquid as it slowly passes through the openings. The tubular membrane is flexible and must be mounted on a manifold that connects it to a source of air or gas, and which can also impart buoyancy or serve as an anchor in the liquid, but this document does not disclose the ability to inject gases into the sea cages with reduced space, since it does not comprise a compact diffuser with multiple functions per unit, since it comprises a single pipe, and therefore, a single opening size, which may be optimal for a gas with a specific function, but not for the other gases that comprise other specific functions. In other words, a pipe with an opening size is for the air and thus produces upwelling, but that same opening is not optimal for the passage of the fluid that comprises at least 50% oxygen or more or is pure oxygen for the oxygenation of the fluid which is normally water.

CN 101 033 099 A discloses a fluid injection device according to the preamble of claim 1. CN 106 818 606 A and US 2010/174099 A1 disclose further fluid injection devices.

### SOLUTION TO THE TECHNICAL PROBLEM

To remedy the problem posed and according to the invention defined in claim 1, a device for gas injection in sea, lake or river cages with reduced space is disclosed, comprising a compact diffuser with multiple functions per unit, since it includes at least two pipes or tubes, rigid or flexible, with injectors of different sizes to dissolve different gases or fluids in a liquid fluid, normally river, sea, lake water, wherein each fluid is supplied in a pipe or pipes, without being mixed, inside each pipe and that It allows its assembly and maintenance without the use of tools.

### DESCRIPTION OF THE DRAWINGS

Figure 1 represents the prior art of a diffuser with an air hose.
Figure 2 represents a general view of the present fluid injection device (100).
Figure 3 represents a view of the structure of the present fluid injection device (100).
Figure 4 represents a side view of a fastening bar (103).
Figure 5 represents an isometric view of a fastening bar (103).
Figure 6 represents a side view of a fastening bar (103) with different sizes of fastening means (104).

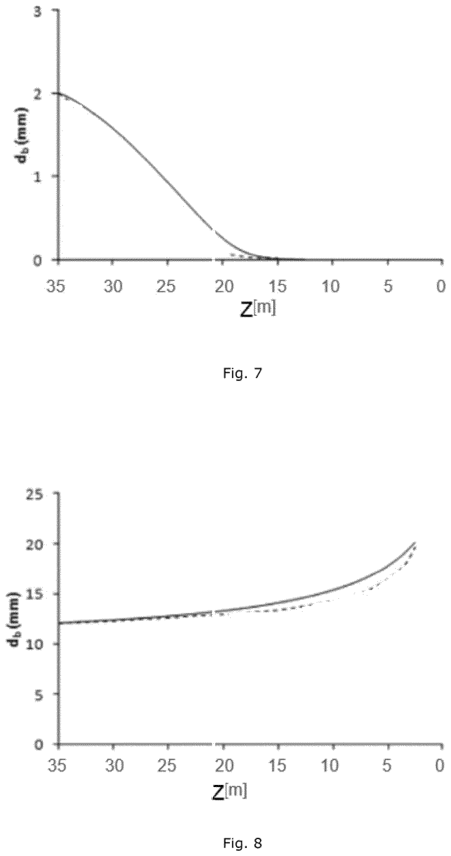

Figure 7 represents the variation of bubble size in oxygenation.
Figure 8 represents the variation of bubble size in upwelling.

### DESCRIPTION OF THE INVENTION

The device also optimizes the effect of oxygenation and upwelling in the water column, by having exclusively designed diffuser hoses that generate bubbles whose diameter and intensity (flow) maximize mass transfer in the case of oxygenation and flow rate of ascending water in the case of upwelling.

In particular, it is related to a device consisting of a diffuser holder made of a material resistant to sea water and with negative buoyancy, in which the different diffuser hoses for each use are wound in the form of concentric spirals. Each diffuser hose has a differentiated power supply, so that the device can be used independently for oxygenation, upwelling or other desired uses.

This technology is a dual diffuser or with multiple pipes or hoses, which includes the following advantages:
Modular and compact diffuser that is easy to assemble.
It avoids catenaries, allowing depth control and location in the cage.
Independent use for upwelling and oxygenation.

The main advantages of this new device are the reduction of elements installed in the cage, maintenance without tools allowing easy exchange of hoses, by combining oxygen diffusers, upwelling discs, among others, in the same unit, in addition to having oxygen delivery capabilities between 10 kg/h and 150 kg/h of oxygen and between 0.2 m³/min and 10 m³/min of air, per cage. On the other hand, it facilitates the operation and maintenance of the devices in the cage by the producer and the services, since the installation of these devices consists of only 2 lines/ropes; a line from which the devices are suspended in the water column and a line to regulate the height and hoist each device independently.

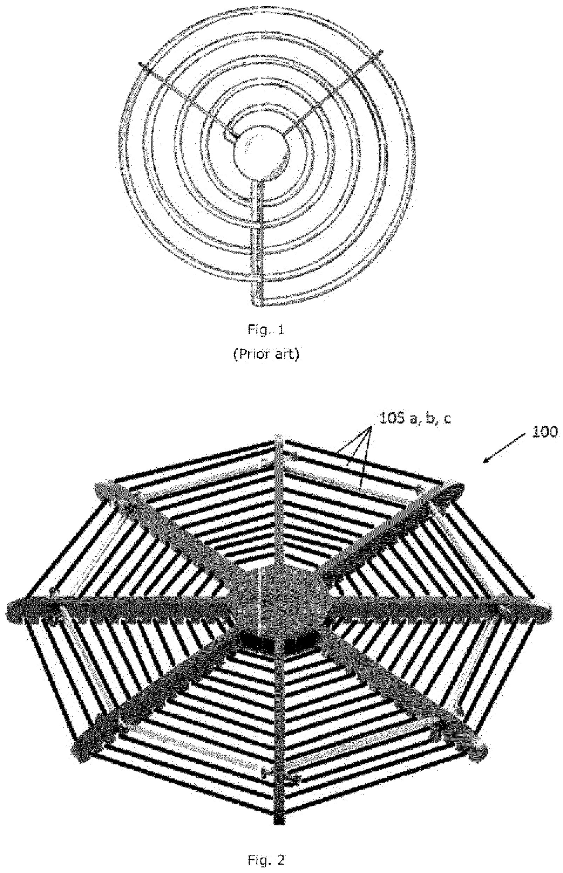

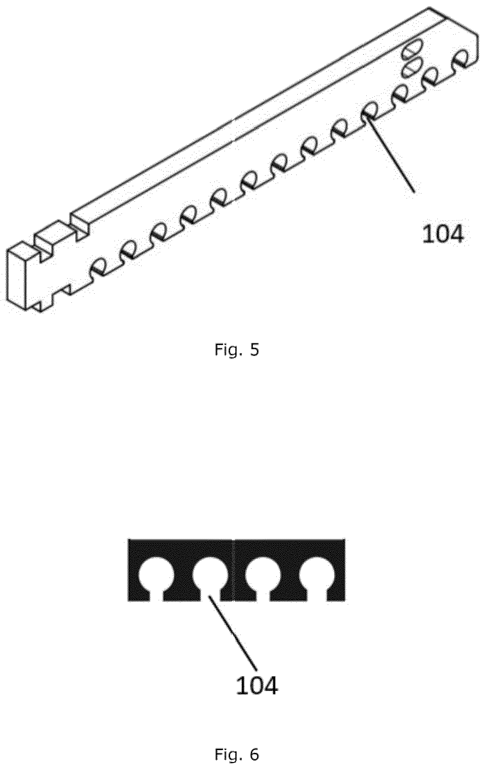

As shown in Figures 2 to 6, the present invention discloses a fluid injection device (100) in cages for aquaculture in the sea, lake, river, or artificial containers, which improves the physicochemical and environmental conditions of a fluid through oxygenation, upwelling, among others, which allows its assembly and maintenance without the use of tools, which includes:
a. a chassis (101), comprising a central body (102) with fastening bars (103) and fastening means (104) of fluid injection means (105);
b. at least two fluid injection means (105) placed in the fastening means (104), whereby, in each fluid injection means (105 a, b), a different fluid is supplied independently from its supply source different from each different fluid; Y
c. feeding means for each of the fluids connected to each of the fluid injection means (105).

In a preferred configuration, it also comprises at least three fluid injection means (105 a, b, c) placed in the chassis (101) where, in each fluid injection means (105 a, b, c), a different fluid and independently from its source of supply of each different fluid is supplied.

The chassis is made of PVC, HDPE, polymeric, stainless steel, metallic, copper or a mixture thereof, and the means of fluid injection (105) are: tubes, pipes, hoses or rigid pipes, membranes, or injection chambers, where the tubes, pipes, hoses or rigid pipes, membranes or injection chambers are perforated and/or permeable to the fluids to be supplied.

In another preferred configuration, the fluid injection means (105) comprise different section sizes for the different fluids to be injected and the fastening means (104) are quick couplings, to fix the fluid injection means (105) without the need of tools or other additional fastening means, where the fastening means (104) have a "C" shape to press-fit the fluid injection means (105).

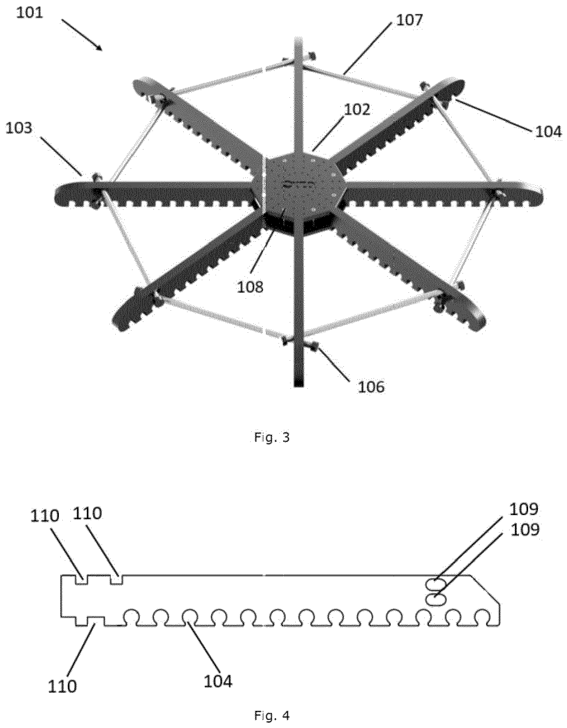

In a preferred configuration, the fastening means (104) have different sizes of "C" shaped opening to press fit the different section sizes of the fluid injection means, as shown in Figures 4 to 6.

The fluid injection means (105) are distributed inside the area comprising the chassis.

In another preferred configuration, a first fluid injection means (105) is an oxygenation pipe with a perforation diameter of less than 100 microns.

In another preferred configuration, a second fluid injection means (105) is an upwelling pipe having a drilling diameter greater than 500 microns and ideally greater than 1000 microns.

In another preferred configuration, a third fluid injection means (105) is a water pipe with some fluid dissolved in it, which has a perforation diameter greater than 1000 microns and ideally greater than 2000 microns.

The dissolved fluid is chosen from air, oxygen, ozone, hydrogen peroxide, among others.

According to the invention, the fastening bars (103) comprise holes (109) to fix outer bars (107) and thereby increase negative buoyancy, where the outer bars (107) comprise stops (106), which prevent the displacement of said outer bars (107). In addition, the fastening bars (103) comprise curved or chamfered ends at their distal ends from the center to prevent them from getting caught in the culturing centers. In another preferred configuration, the fastening bars (103) comprise grooves (110) at their center proximal ends to fix the fastening bars (103) to the central body (102).

In another preferred configuration, the central body (102) is formed between an upper part and a lower part joined by fixing means (108), such as bolts, screws, snaps, rivets, glue, among other fixing means.

Each fluid injection means (105) comprises a coupling, to be connected to supply hoses.

### APPLICATION EXAMPLES

The table below describes the features of a diffuser used in particular for oxygenation and upwelling:

| Features | Oxygenation | Upwelling |
|---|---|---|
| Application area | Aquaculture | Aquaculture |
| Use conditions | Ambient oxygen depletions Production cycle improvement | Mitigation of microalgae (antibloom) |
| | | Water column renewal |
| Feeding | Oxygen Pressure > 1.75 Kgf/cm² | Air Pressure> 2.81 Kgf / cm² |
| | Purity > 90% | |
| Minimum flow per diffuser | 0.25 Nm³/min | 1 Nm³/min |
| Diffusers per cage | 4 | 4 |
| Operating depth | 12 - 16 meters | |
| Bubble diameter | 50 - 200 µm | 2- 4 mm |
| Effects on the water column | Dissolution of O₂ bubbles. Increased dissolved oxygen concentration | Generation of ascending water flow. |
| | | Change and dilution of the culture medium. |

The present device was installed at the bottom and at the corners of four rectangular cages.

This device was fed with an equipment that delivered 64.4 m3/min of air and 5.2 m³/min of oxygen.

In this 4-hour test, it was shown that the upwelling and oxygenation in the four cages decreased the final concentration of microalgae by at least 50% compared to the other four cages without oxygenation and upwelling.

This diffuser is for combined use, in particular:

Aquaculture diffuser with dual functionality; upwelling by air injection, and oxygenation by injection of oxygen micro-bubbles.

It has an independent power supply for upwelling and oxygenation, and the diffuser can be used for each function separately as well as for both simultaneously.

The hoses are specially designed to maximize the effect during each use, this implies perforations of 50 to 100 µm, low flow and a minimum distance between sections of 10 cm for the oxygenation hose (maximizes oxygen transfer efficiency) and perforations of 2 at 4 mm and high flow for the upwelling hose (maximizes drag and upward flow of water, keeping the bubble integrity during the ascent in the water column)

The circular geometry was used as the base of the diffuser; however, different shapes and sizes can be considered for the structure. This as long as the hoses are leveled at the same height throughout their route and a distance between sections of the oxygen hose of at least 7 cm is maintained.

## Claims

1. A fluid injection device (100) in cages for aquaculture in a sea, lake, river, or artificial containers, which improves physicochemical and environmental conditions of a fluid through oxygenation, upwelling, among others, including:
a. a chassis (101), comprising a central body (102) with fastening bars (103), each fastening bar (103) comprising fastening means (104) of fluid injection means (105); wherein the fastening bars (103) extend from the central body radially outwards, and the fastening bars (103) comprise each:
i. some holes (109) to fix outer bars (107), and thereby increase a negative buoyancy of the chassis (101), wherein said outer bars (107) comprise stops (106), which prevent the displacement of said outer bars (106), and
ii. at a proximal end of the fastening bar (103) near the central body (102), some grooves (110) to fix the fastening bars (103) to the central body (102);
said fluid injection device being **characterized in that** it further comprises:
b. at least two fluid injection means (105) placed in the fastening means (104), whereby in each fluid injection means (105 a, b), a different fluid is supplied independently from the fluid injection means (105, a, b) supply source different from each different fluid, the fluid injection means (105) comprise different perforation diameters for the different fluids to be injected, wherein the fluid injection means (105) are distributed inside an area comprising the chassis; and
c. feeding means for each of the fluids connected to each of the fluid injection means (105), each fluid injection means (105) supplied with one of the two different fluids, the feeding means having delivery capabilities between 10 kg/h and 150 kg/h one fluid and having delivery capabilities between 0,2 m³/min and 10 m³/min (14,7 kg/h and 735 kg/h) other fluid.

2. The fluid injection device (100) of claim 1, comprising at least three fluid injection means (105 a, b, c) placed in the chassis (101), wherein in each fluid injection means (105 a, b, c), a different fluid and independently from the fluid injection means (105, a, b, c) supply source of each different fluid is supplied.

3. The fluid injection device (100) of claim 1 or 2, wherein the chassis is made of PVC, HDPE, polymeric, stainless steel, metallic, copper or a mixture thereof.

4. The fluid injection device (100) of claim 1 or 2, wherein the fluid injection means (105) are: tubes, pipes, hoses or rigid pipes, membranes, or injection chambers.

5. The fluid injection device (100) of claim 4, wherein the tubes, pipes, hoses or rigid pipes, membranes or injection chambers are perforated and/or permeable to the fluids to be supplied.

6. The fluid injection device (100) of claim 1 or 2, wherein the fluid injection means (105) comprise different section sizes for the different fluids to be injected.

7. The fluid injection device (100) of claim 1 or 2, wherein the fastening means (104) are quick couplings, to fix the fluid injection means (105) without the need of tools or other additional fastening means.

8. The fluid injection device (100) of claim 7, wherein the fastening means (104) have a "C" shape to press-fit the fluid injection means (105), wherein the fastening means (104) have different sizes of opening of the "C" shape to press-fit the different section sizes of the fluid injection means.

9. The fluid injection device (100) of claim 1, wherein a first fluid injection means (105) is an oxygenation pipe that has a perforation diameter of less than 100 microns.

10. The fluid injection device (100) of claim 1, wherein a second fluid injection means (105) is an upwelling pipe that has a perforation diameter greater than 500 microns.

11. The fluid injection device (100) of claim 2, wherein a third fluid injection means (105) is a water pipe with some fluid dissolved in it, which has a perforation diameter greater than 1000 microns; wherein the dissolved fluid is chosen from air, oxygen, ozone, hydrogen peroxide, among others.

12. The fluid injection device (100) of claim 1, wherein the fastening bars (103) comprise curved or chamfered ends at their distal ends from the center to prevent them from getting caught in the culturing centers and the central body (102) is formed between an upper part and a lower part joined by fixing means (108), and wherein each fluid injection means (105) comprises a coupling, to be connected to supply hoses.

## Patentansprüche

1. Fluideinspritzvorrichtung (100) in Käfigen für die Aquakultur in einem Meer, See, Fluss oder künstlichen Behältern, die die physikalisch-chemischen und umweltbezogenen Bedingungen eines Fluids durch Oxygenierung, Auftrieb, unter anderem, verbessert, das Folgendes enthält:
a. ein Chassis (101), umfassend einen zentralen Körper (102) mit Befestigungsstangen (103), wobei jede Befestigungsstange (103) Befestigungsmittel (104) von Fluideinspritzmitteln (105) umfasst; wobei sich die Befestigungsstangen (103) von dem zentralen Körper radial nach außen erstrecken und die Befestigungsstangen (103) jeweils Folgendes umfassen:
i. einige Löcher (109), um äußere Stangen (107) zu fixieren und dadurch eine negative Auftriebskraft des Chassis (101) zu erhöhen, wobei die äußeren Stangen (107) Anschläge (106) umfassen, die die Verschiebung der äußeren Stangen (106) verhindern, und
ii. an einem proximalen Ende der Befestigungsstange (103) in der Nähe des zentralen Körpers (102) einige Nuten (110) zum Fixieren der Befestigungsstangen (103) an dem zentralen Körper (102);
wobei die Fluideinspritzvorrichtung **dadurch gekennzeichnet ist, dass** sie ferner Folgendes umfasst:
b. mindestens zwei Fluideinspritzmittel (105), die in den Befestigungsmitteln (104) platziert sind, wobei in jedem Fluideinspritzmittel (105 a, b) ein unterschiedliches Fluid unabhängig von der unterschiedlichen Versorgungsquelle des unterschiedlichen Fluids für das Fluideinspritzmittel (105 a, b) zugeführt wird, wobei die Fluideinspritzmittel (105) unterschiedliche Perforationsdurchmesser für die zu einspritzenden unterschiedlichen Fluide umfassen, wobei die Fluideinspritzmittel (105) innerhalb eines Bereichs verteilt sind, der das Chassis umfasst;
und
c. Zuführmittel für jedes der Fluide, die mit jedem der Fluideinspritzmittel (105) verbunden sind, wobei jedem Fluideinspritzmittel (105) eines der beiden unterschiedlichen Fluide zugeführt wird, wobei die Zuführmittel Lieferkapazitäten zwischen 10 kg/h und 150 kg/h für ein Fluid aufweisen und Lieferkapazitäten zwischen 0,2 m³/min und 10 m³/min (14,7 kg/h und 735 kg/h) für das andere Fluid aufweisen.

2. Fluideinspritzvorrichtung (100) nach Anspruch 1, umfassend mindestens drei Fluideinspritzmittel (105 a, b, c), die am Chassis (101) platziert sind, wobei in jedem Fluideinspritzmittel (105 a, b, c) ein unterschiedliches Fluid und unabhängig von der Versorgungsquelle des jeweiligen unterschiedlichen Fluids für das Fluideinspritzmittel (105 a, b, c) zugeführt wird.

3. Fluideinspritzvorrichtung (100) nach Anspruch 1 oder 2, wobei das Chassis aus PVC, HDPE, Polymer, rostfreiem Stahl, Metall, Kupfer oder einem Gemisch davon hergestellt ist.

4. Fluideinspritzvorrichtung (100) nach Anspruch 1 oder 2, wobei die Fluideinspritzmittel (105) folgende sind: Rohre, Leitungen, Schläuche oder starre Rohre, Membranen oder Einspritzkammern.

5. Fluideinspritzvorrichtung (100) nach Anspruch 4, wobei die Rohre, Leitungen, Schläuche oder starren Rohre, Membranen oder Einspritzkammern perforiert und/oder durchlässig für die zuzuführenden Fluide sind.

6. Fluideinspritzvorrichtung (100) nach Anspruch 1 oder 2, wobei die Fluideinspritzmittel (105) unterschiedliche Querschnittsgrößen für die unterschiedlichen einzuspritzenden Fluide umfassen.

7. Fluideinspritzvorrichtung (100) nach Anspruch 1 oder 2, wobei die Befestigungsmittel (104) Schnellkupplungen sind, um die Fluideinspritzmittel (105) ohne die Notwendigkeit von Werkzeugen oder anderen zusätzlichen Befestigungsmitteln zu fixieren.

8. Fluideinspritzvorrichtung (100) nach Anspruch 7, wobei die Befestigungsmittel (104) eine "C"-Form aufweisen, um die Fluideinspritzmittel (105) einzupressen, wobei die Befestigungsmittel (104) unterschiedliche Öffnungsgrößen der "C"-Form aufweisen, um die unterschiedlichen Querschnittsgrößen der Fluideinspritzmittel einzupressen.

9. Fluideinspritzvorrichtung (100) nach Anspruch 1, wobei ein erstes Fluideinspritzmittel (105) ein Oxygenierungsrohr ist, das einen Perforationsdurchmesser von weniger als 100 Mikrometer aufweist.

10. Fluideinspritzvorrichtung (100) nach Anspruch 1, wobei ein zweites Fluideinspritzmittel (105) ein Auftriebsrohr ist, das einen Perforationsdurchmesser von mehr als 500 Mikrometer aufweist.

11. Fluideinspritzvorrichtung (100) nach Anspruch 2, wobei ein drittes Fluideinspritzmittel (105) ein Wasserrohr mit einem darin gelösten Fluid ist, das einen Perforationsdurchmesser von mehr als 1000 Mikrometer aufweist; wobei das gelöste Fluid aus Luft, Sauerstoff, Ozon und Wasserstoffperoxid unter anderem ausgewählt ist.

12. Fluideinspritzvorrichtung (100) nach Anspruch 1, wobei die Befestigungsstangen (103) an ihren von der Mitte aus distalen Enden gekrümmte oder abgeschrägte Enden aufweisen, um zu verhindern, dass sie sich in den Kultivierungszentren verfangen, und der zentrale Körper (102) aus einem oberen Teil und einem unteren Teil gebildet ist, die durch Befestigungsmittel (108) zusammengefügt sind, und wobei jedes Fluideinspritzmittel (105) eine Kupplung umfasst, die mit Zuführungsschläuchen zu verbinden ist.

## Revendications

1. Dispositif d'injection de fluide (100) dans des cages pour l'aquaculture en mer, en lac, en rivière ou dans des conteneurs artificiels, qui améliore les conditions physicochimiques et environnementales d'un fluide par oxygénation, remontée d'eau, entre autres, comprenant :
a. un châssis (101), comprenant un corps central (102) avec des barres de fixation (103), chaque barre de fixation (103) comprenant des moyens de fixation (104) de moyens d'injection de fluide (105) ; dans lequel les barres de fixation (103) s'étendent radialement vers l'extérieur à partir du corps central, et les barres de fixation (103) comprennent chacune :
i. des trous (109) pour fixer des barres extérieures (107), et ainsi augmenter une flottabilité négative du châssis (101), dans lequel lesdites barres extérieures (107) comprennent des butées (106) qui empêchent le déplacement desdites barres extérieures (106), et
ii. à une extrémité proximale de la barre de fixation (103) proche du corps central (102), des rainures (110) pour fixer les barres de fixation (103) au corps central (102) ;
ledit dispositif d'injection de fluide étant **caractérisé en ce qu'**il comprend en outre :
b. au moins deux moyens d'injection de fluide (105) placés dans les moyens de fixation (104), de sorte que, dans chaque moyen d'injection de fluide (105 a, b), un fluide différent est fourni indépendamment à partir d'une source d'alimentation des moyens d'injection de fluide (105, a, b) différente pour chaque fluide différent, les moyens d'injection de fluide (105) comprenant des diamètres de perforation différents pour les différents fluides à injecter, dans lequel les moyens d'injection de fluide (105) sont distribués à l'intérieur d'une zone comprenant le châssis ;
et
c. des moyens d'alimentation pour chacun des fluides connectés à chacun des moyens d'injection de fluide (105), chaque moyen d'injection de fluide (105) étant alimenté avec l'un des deux fluides différents, les moyens d'alimentation ayant des capacités de délivrance comprises entre 10 kg/h et 150 kg/h pour un fluide et des capacités de délivrance comprises entre 0,2 m3/min et 10 m3/min (14,7 kg/h et 735 kg/h) pour l'autre fluide.

2. Dispositif d'injection de fluide (100) selon la revendication 1, comprenant au moins trois moyens d'injection de fluide (105 a, b, c) placés dans le châssis (101), dans lequel, dans chaque moyen d'injection de fluide (105 a, b, c), un fluide différent est fourni indépendamment à partir de la source d'alimentation des moyens d'injection de fluide (105, a, b, c) pour chacun des fluides différents.

3. Dispositif d'injection de fluide (100) selon la revendication 1 ou 2, dans lequel le châssis est réalisé en PVC, HDPE, matériau polymérique, acier inoxydable, matériau métallique, cuivre ou un mélange de ceux-ci.

4. Dispositif d'injection de fluide (100) selon la revendication 1 ou 2, dans lequel les moyens d'injection de fluide (105) sont : des tubes, des canalisations, des flexibles ou des tuyaux rigides, des membranes ou des chambres d'injection.

5. Dispositif d'injection de fluide (100) selon la revendication 4, dans lequel les tubes, canalisations, flexibles ou tuyaux rigides, membranes ou chambres d'injection sont perforés et/ou perméables aux fluides à fournir.

6. Dispositif d'injection de fluide (100) selon la revendication 1 ou 2, dans lequel les moyens d'injection de fluide (105) comprennent des tailles de section différentes pour les différents fluides à injecter.

7. Dispositif d'injection de fluide (100) selon la revendication 1 ou 2, dans lequel les moyens de fixation (104) sont des raccords rapides, pour fixer les moyens d'injection de fluide (105) sans nécessiter d'outils ni d'autres moyens de fixation supplémentaires.

8. Dispositif d'injection de fluide (100) selon la revendication 7, dans lequel les moyens de fixation (104) présentent une forme en « C » pour un emboîtement par pression des moyens d'injection de fluide (105), et dans lequel les moyens de fixation (104) présentent des tailles d'ouverture différentes de la forme en « C » pour l'emboîtement par pression des différentes tailles de section des moyens d'injection de fluide.

9. Dispositif d'injection de fluide (100) selon la revendication 1, dans lequel un premier moyen d'injection de fluide (105) est un tuyau d'oxygénation présentant un diamètre de perforation inférieur à 100 microns.

10. Dispositif d'injection de fluide (100) selon la revendication 1, dans lequel un second moyen d'injection de fluide (105) est un tuyau de remontée d'eau présentant un diamètre de perforation supérieur à 500 microns.

11. Dispositif d'injection de fluide (100) selon la revendication 2, dans lequel un troisième moyen d'injection de fluide (105) est un tuyau d'eau contenant un fluide dissous, présentant un diamètre de perforation supérieur à 1000 microns ; dans lequel le fluide dissous est choisi parmi l'air, l'oxygène, l'ozone, le peroxyde d'hydrogène, entre autres.

12. Dispositif d'injection de fluide (100) selon la revendication 1, dans lequel les barres de fixation (103) comprennent des extrémités courbes ou chanfreinées à leurs extrémités distales par rapport au centre afin d'éviter qu'elles ne s'accrochent dans les centres de culture, et le corps central (102) est formé entre une partie supérieure et une partie inférieure réunies par des moyens de fixation (108), et dans lequel chaque moyen d'injection de fluide (105) comprend un raccord destiné à être connecté à des flexibles d'alimentation.
